# EUROPÄISCHE PATENTSCHRIFT

(11) **EP 1 372 522 B1**
(45) Veröffentlichungstag und Bekanntmachung des Hinweises auf die Patenterteilung: **25.10.2006**
(21) Anmeldenummer: 02706784.2
(22) Anmeldetag: 25.03.2002
(51) Int. Cl.: A61C 13/12

(54) **VERFAHREN UND VORRICHTUNG ZUM AUFTRENNEN ZAHNTECHNISCHER MODELLE**
METHOD AND DEVICE FOR SEPARATING DENTAL MODELS
PROCEDE ET DISPOSITIF PERMETTANT DE SEPARER DES MODELES DENTAIRES

(30) Priorität: 25.03.2001 DE 10114493
(43) Veröffentlichungstag der Anmeldung: 02.01.2004
(73) Patentinhaber: Jan Langner GmbH, 73529 Schwäbisch Gmünd (DE)
(72) Erfinder: LANGNER, Jan, 73529 Schwäbisch-Gmünd (DE)
(74) Vertreter: Fürst, Siegfried
(86) Internationale Anmeldenummer: PCT/EP2002/003337
(87) Internationale Veröffentlichungsnummer: WO 2002/076322

(56) Entgegenhaltungen:
- DE-C- 19 722 989
- DE-U- 9 014 971
- US-A- 3 890 710
- US-A- 4 265 619
- US-A- 4 885 965

## Beschreibung

Die Erfindung betrifft ein Verfahren zum Auftrennen zahntechnischer Modelle, die in der Dentaltechnik, der zahnärztlichen Prothetik, insbesondere in der Kronen- und Brückentechnik, als auch in der konservierenden Zahnmedizin, z.B. in der Inlay-Technik, eingesetzt werden.
Die Erfindung betrifft weiterhin eine Vorrichtung zum Auftrennen sogenannter Modellstümpfe, vielfach auch Sägestümpfe genannt, die zum Gelingen einer perfekten Arbeit Voraussetzung sind.

In der Regel besteht das zahntechnische Modell, vielfach auch Arbeitsmodell und im voranschreitenden Arbeitsprozess dann auch Meistermodell genannt, aus der durch Abformen gewonnenen Kiefer-Zahnpartie und aus einer Modellbasis, in Fachkreisen auch Sockel genannt. Die Kiefer-Zahnpartie, auch Zahnkranz genannt, ist auf der Modellbasis trennbar angeordnet, wobei die Verbindung zwischen Modellbasis und dem Zahnkranz über Haltestifte, sogenannte Pin-Technik hergestellt ist. Einzelne, bestimmte Modellabschnitte, die Sägestümpfe, werden durch Durchtrennen des Zahnkranzes an vorbestimmten Stellen gewonnen.

Der Zahnkranz als auch die Modellbasis werden aus Gips hergestellt. Nicht nur wegen der Expansion von Gips in der Abbindephase und der daraus resultierenden Abweichung des Zahnstandes gegenüber der natürlichen Situation des Patienten, sondern auch wegen der notwendigen hohen Passgenauigkeit bei ausgedehnten Brückenverbänden sind vielfach die Modellsysteme auf die Verwendung von Einzelstümpfen angewiesen.

Zum Trennen der zahntechnischen Modelle werden in der Regel Kreissägen einfacher Bauart oder Trennvorrichtungen mit einem in Führungen in mehreren Richtungen beweglichen Arbeitstisch eingesetzt. Bekannt ist das Trennen des Zahnkranzes von oben, von der Seite und von schräg unten.

So ist aus der DE 42 32 299 C1 eine Kreissäge für die Zahntechnik bekannt, bei der der Arbeitstisch waagerecht und parallel zur Sägerichtung des von oben wirksamen Kreissägeblattes bewegbar ist. Nachteilig bei dieser Vorrichtung ist, dass bei schräg zur sogenannten Einschubrichtung stehenden Zähnen, die dadurch sich teils einander berühren, ein Trennen ohne Beschädigung eines oder mehrerer (Modell-) Zähne kaum möglich ist. Nacharbeiten sind dann unumgänglich.

Aus der DE 41 13 651 A1 ist zudem eine Vorrichtung bekannt, bei der das Modell mit Hilfe eines Laserstrahles zum Sägeblatt ausgerichtet wird. Die Vorrichtung ist konstruktiv so aufgebaut, dass das Modell auf einem Schlitten sitzend in einer im Wesentlichen waagerechten Ebene in zwei Achsen bewegbar ist. Die Kreissäge ist an einer weiteren Führung verschieb- und arretierbar derart angeordnet, dass das Sägeblatt von oben und auch von schräg unten an das Modell herangeführt werden kann. Neben dem hohen konstruktionsmäßigen Aufwand zur Herstellung der Vorrichtung ist weiterhin von Nachteil, dass die Teile der Vorrichtung sowie das Modell selbst einer hohen Staubbelastung ausgesetzt sind.

Weiterhin ist aus der DE 36 44 041 C2 noch eine Vorrichtung bekannt, bei der in der Senkrechten untereinander zwei Sägeblätter angeordnet sind, mit denen das Modell von oben und von unten angeschnitten wird, sodass ein schmaler Steg als Sollbruchstelle stehen bleibt. Von Nachteile bei dieser Vorrichtung ist insbesondere ebenfalls das Beschädigen der (Modell-) Zähne mit den daraus resultierenden Nacharbeiten.

Aus der US-A-4,885,965 ist eine Vorrichtung zum Segmentieren von Zahnmodellen bekannt, bei der unterhalb eines Arbeitstisches eine rotierbare Trennscheibe vorgesehen ist. Im betreffenden Bereich dieser Trennscheibe besitzt der Arbeitstisch einen Schlitz. Der Arbeitstisch ist in vertikaler Richtung von einer oberen Stellung nach unten bewegbar, sodass die Trennscheibe von unten her aus dem im Arbeitstisch vorgesehenen Schlitz heraustritt und somit das auf dem Arbeitstisch platzierte Zahnmodell eingeschlitzt oder durchtrennt werden kann. Der Arbeitstisch dieser Vorrichtung wird durch jeweils zwei an gegenüberliegenden Seiten im Inneren des Gehäuses dieser Vorrichtung vorgesehenen Linearführungen verschiebbar gehaltert. Beide Linearführungen weisen jeweils einen Führungsbolzen und eine Führungshülse auf, wobei die Führungshülse mittels einer Feder Kraft beaufschlagt ist, sodass der Arbeitstisch, ohne Beeinflussung durch den Bediener, stets in einer oberen, die Trennscheibe verdeckenden Position positioniert ist. Da die Linearführungen ebenso wie die Trennscheibe etwa im Mittenbereich des Arbeitstisches unter selbigem angeordnet sind, werden die beiden Linearführungen durch zusätzlich angebrachte Schutzhüllen vor dem beim Trennen anfallenden Staub geschützt.
Zur Erleichterung des Ausrichtens des zu trennenden Zahnmodelles auf dem Arbeitstisch ist, von der Bedienseite der Vorrichtung aus gesehen, im Bereich der hinteren Front der Vorrichtung eine nach oben aufragende Leuchte vorgesehen, deren Lichtaustrittsöffnung oberhalb des in dem Arbeitstisch vorgesehenen Durchbruches positioniert ist. Durch diese Gestaltung wird das Sichtfeld für den Bediener stark eingeschränkt.
Diese Vorrichtung ist in ihrem Aufbau sehr aufwändig und somit sind die Fertigungskosten nicht unerheblich. Zudem fallen zusätzliche Fertigungskosten an, weil die beiden Linearführungen gegen Staub abgedichtet werden müssen.
Nachteilig ist auch noch die Lage der Linearführungen. Sofern die Kraftaufbringung zum Niederdrücken des Tisches nicht genau in Höhe der Linearführungen erfolgt, sondern zum Beispiel mehr zu der dem Bediener zugewandten Kante des Arbeitstisches hin, tritt eine Hebelwirkung in der Führung auf, wodurch ein feinfühliges und präzises Absenken des Arbeitstisches gegen die Trennscheibe erschwert oder sogar verhindert wird.

Deshalb besteht die Aufgabe der Erfindung darin, einerseits ein neues Verfahren zum Auftrennen zahntechnischer Modelle zu finden, mit dem neben einer Zeitersparnis auch die Staubbelastung reduziert werden kann, sowie darin, andererseits eine Vorrichtung zu finden, mit der das Trennen eines zahntechnischen Modells zeitsparender und bedienerfreundlicher erfolgen kann; als Nebenaufgabe soll das neue Verfahren umweltfreundlicher als bisherige Verfahren sein.

Zum Auftrennen zahntechnischer Modelle in einzelne Modellstümpfe sieht die Erfindung ein neues Verfahren vor, bei dem der zahntechnische Zahnkranz auf einer Modellbasis lösbar aufgesteckt ist und mit einer Trennscheibe das Trennen erfolgt, wobei das zahntechnische Modell und die Trennscheibe relativ zueinander bewegt werden und das zahntechnische Modell zum Trennen auf einem Modelltisch, der auch als Sägetisch bezeichnet wird, fixiert ist. Wesentlich bei dem neuen Verfahren ist, dass das auf dem Modelltisch fixierte zahntechnische Modell mitsamt der an einem Ende des Modelltisches vorgesehenen Modellauflage unter Beschreiten einer gedachten Kreisbogenlinie um das andere, um eine horizontale Achse drehbeweglich gehalterte Ende des Modelltisches zur Ausführung des Trennschnittes in Richtung Trennscheibe wahiweise bewegbar ist.

Versuche haben dem Erfinder gezeigt, dass bei einer nach dem neuen Verfahren hergestellten Modellbasis sehr gute Ergebnisse erreicht werden.

Gemäß einer speziellen Weiterbildung des Verfahrens zum Auftrennen wird während der für den Trennvorgang im Wesentlichen vertikal gerichteten, kreisbogenlinienförmigen Bewegung des Modelltisches eine weitere, im Wesentlichen horizontal geführte Bewegung ersterer zumindest zeitweise überlagert, die durch kontrolliertes Verschieben des zahntechnischen Modells auf der Modellauflage des Modelltisches erzeugt wird.

Vorteilhaft ist dabei, dass das zahntechnische Modell mit den Händen des Bedieners auf der Arbeitsfläche, der Modellauflage des Modelltisches, fixiert und bei Erfordernis mit den Händen, vorzugsweise von hinten nach vorn in Richtung Bediener, verschoben wird.

Entgegen bisheriger Verfahrensabläufe wird nicht die Trennscheibe gegen das Modell gefahren, sondern nunmehr der Modelltisch mitsamt dem darauf örtlich flexibel fixierten zahntechnischen Modell sanft in Richtung und gegen die Trennscheibe geführt. Die Trennscheibe fährt infoige dessen in die Modellbasis sowie in den Zahnkranz schonend mit einem weichen Anschnitt hinein, wodurch insbesondere die Randbereiche des Zahnkranzes äußerst schonend und sehr sauber durchtrennt werden. Außerdem wird der Entstehung von Trennstaub, positiv entgegengewirkt.

Bevorzugt ist zudem vorgesehen, dass die Modellauflage im Wesentlichen horizontal orientiert ist und während der Bewegung des Modelltisches für das Trennen im Wesentlichen unter einem rechten Winkel zur Trennscheibe angeordnet geführt wird.

In weiterer Ausgestaltung des neuen Verfahrens ist zudem vorgesehen, dass zur Ausrichtung des Zahnkranzes beziehungsweise der Festlegung der Trennstelle am Zahnkranz eine Peileinrichtung, bevorzugt ein gebündelter Lichtstrahl, vorzugsweise Laserlicht verwendet wird. Vorteilhaft ist dabei, dass die Peileinrichtung von der Bedienerseite aus das Modell anpeilt.

Bezüglich der vorrichtungsgemäßen Lösung der anstehenden Problematik geht die Erfindung von einer Trennvorrichtung aus, bei der die Trennscheibe, bevorzugt ein Sägeblatt, im Wesentlichen von unten her das zahntechnische Modell einschlitzt bzw. durchtrennt. Zur Halterung und Fixierung des zahntechnischen Modells ist ein Modelltisch vorgesehen, welcher eine Modellauflage zur Aufnahme des zahntechnischen Modells aufweist. Neuartig an dieser Trennvorrichtung ist, dass die gesamte Trennvorrichtung im Gegensatz zu bekannten Trennvorrichtungen relativ flach bauend ist. Um diesen Zustand zu erreichen ist ein Gehäuse vorgesehen, in welchem die Antriebseinheit für die Trennscheibe sowie die Schalt- und Steuerungstechnik angeordnet sind. Dabei liegt die Antriebseinheit im Gehäuse im Wesentlichen unterhalb der Ebene der Modellauflage des Modelltisches.

Bevorzugt ist vorgesehen, dass das Gehäuse, in Draufsicht gesehen, die Form eines Kreises hat, O-förmig oder ellipsenförmig ausgebildet ist.

Der Modelltisch ist mit einem seiner beiden Endbereiche im Gehäuse um eine horizontale Achse drehbeweglich gehaltert und ragt mit seinem Mittelteil und dem daran anschließenden anderen Endbereich in Art eines Auslegers in den vom Gehäuse im Wesentlichen umschlossenen Raum hinein. Dieser andere Endbereich des Modelltisches ist zur Aufnahme des zahntechnischen Modells ausgebildet und weist eine vorzugsweise kreisförmig ausgebildete Modellauflage auf,
wobei selbige parallel zur Drehachse angeordnet ist. Diese Modellauflage, auch Werkstückauflage genannt, befindet sich in der Ausgangsstellung oberhalb der Trennscheibe und ist mit einem der Lage der Trennscheibe und deren Größe korrespondierenden Durchbruch versehen, durch welchen die Trennscheibe während des Trennvorganges hindurchtreten kann.

Die Antriebseinheit für die Trennscheibe ist vorzugsweise linksseitig vom Modelltisch im Gehäuse angeordnet. Diese Antriebseinheit umfasst einen Motor nebst Steuerungstechnik sowie eine in einer Führungshülse stabil gelagerte Welle, an deren freiem Ende die Trennscheibe befestigt ist. Diese Welle ist ebenfalls parallel zur Drehachse des Modelltisches angeordnet.

Unterhalb der Modellauflage sind am Modelltisch, beiderseits vom Durchbruch, je eine Wand, zwischen denen die Trennscheibe läuft, angeordnet, so dass eine Schutzvorrichtung entsteht, damit die Finger des Bedieners während des Arbeitens nicht unbeabsichtigt in die Trennscheibe kommen.

Bevorzugt ist jeweils an der linken und an der rechten Wand noch ein seitwärts abragender Steg vorgesehen, welche in Verbindung mit der jeweiligen Wand eine Fingeranlage bilden, wodurch das Fixieren des zahntechnischen Modells auf der Modellauflage erleichtert wird.

In der linken Wand ist, vom Bediener wegzeigend, also in Richtung des freien Ende des Modelltisches gesehen, hinter dem Steg noch eine im Wesentlichen vertikal gerichtete Ausnehmung vorgesehen, in die die, die drehende Welle umgebende, feststehende Führungshülse des Antriebes während des Absenkens des hinteren Bereiches des Modelltisches eintaucht, damit die Trennscheibe durch den Durchbruch der Modellauflage hindurchtreten kann.

In einer Weiterbildung der Vorrichtung ist korrespondierend zur Trennebene in dem Gehäuse zudem ein Bereich vorgesehen, an den eine Absaugleitung angebracht werden kann, damit der restliche Schleif- bzw. Sägestaub abgesaugt wird.

Gemäß einer speziellen Ausführung sind an diesem Gehäuse im oberen Bereich zudem Bereiche vorgesehen, die als Handauflage ergonomisch ausgebildet sind. Diese Handauflagen sind so positioniert und gestaltet, dass der Bediener während des gesamten Arbeitsvorganges "Schlitzen/Trennen" das zahntechnische Modell auf dem Modelltisch mit seinen Fingern positionieren und fixieren kann, ohne dass die Handballen von der Handauflage abheben.

Weiterhin ist zur Erleichterung der Positionierung des zahntechnischen Modells auf der Modellauflage am Modelltisch, dem Bediener zugewandt, vorzugsweise im gehalterten Bereich des Modelltisches, eine Positionierhilfseinrichtung vorgesehen, z. B. eine Peileinrichtung; bevorzugt ist diese Peileinrichtung eine einfache optische Einrichtung mit einem Peillicht. Als vorteilhaft hat sich zudem erwiesen, dass dieses Peillicht zumindest zeitweise pulsierend ausgestrahlt wird.

Des Weiteren der Erfindung ist vorgesehen, dass ein optischer Sensor oder ein Kontaktschalter im Gehäuse angeordnet ist, welcher durch Absenken des Tisches betätigt wird und in Folge dessen ein Schaltsignal zur Antriebseinheit gibt, wodurch dann die Antriebseinheit eingeschaltet wird.

Dieser optische Sensor beziehungsweise der Kontaktschalter kann gemäß einer weiteren bevorzugter Ausführung auch ein Näherungsschalter sein, der im Bereich der Handauflage oder in zu diesen angrenzenden Bereichen angeordnet werden kann. Bevorzugt ist zudem vorgesehen, dass in beiden Handauflagen ein derartiges Schaltelement vorgesehen ist, so dass die Trennscheibe sich nur dann dreht, wenn beide Hände auf der Handauflage liegen. Neben der Vermeidung von Leerlauf - Energieeinsparung - wird zudem einem unbeabsichtigten Hineingreifen der eventuell anderen freien Hand in die Trennscheibe vorgebeugt.

Bevorzugt ist zudem vorgesehen, dass das Gehäuse aus einem Unterteil und aus einem Oberteil zusammengesetzt ist, wodurch sich fertigungstechnische Vorteile ergeben. Dieses derart gestaltete Gehäuse ist im Wesentlichen ein Hohlkörper, so dass das Unterteil und das Oberteil als kostensparendes Guss- oder Spritzteil ausgeführt werden können.

Zudem kann in dem Gehäuse auch ein Netzteil angeordnet werden, so dass nur die Anschlussleitung zum Stromnetz von dem Gehäuse abragt und somit die Arbeitsfläche rings um die Trennvorrichtung frei ist.
Je nach geplantem Anwendungsfall kann die Antriebseinheit auch rechts vom Modelltisch im Gehäuse angeordnet sein.

Folgend wird die Erfindung anhand eines in Zeichnungen schematisch dargestellten bevorzugten Ausführungsbeispieles näher erläutert. Es zeigen dabei:
- Figur 1:: eine neuartig gestaltete Trennvorrichtung in perspektivischer Ansicht, von schräg links vom Bediener aus;
- Figur 2:: eine perspektivische Ansicht zum Bediener hin;
- Figur 3:: eine perspektivische Ansicht von rechts auf die Trennvorrichtung;
- Figur 4:: die Trennvorrichtung in Draufsicht;
- Figur 5:: eine Ansicht von vorn in Richtung des Bedieners, wobei das Gehäuse in einer vor der Antriebseinheit liegenden Ebene aufgeschnitten ist; und
- Figur 6:: eine Sicht von unten auf die Trennvorrichtung.

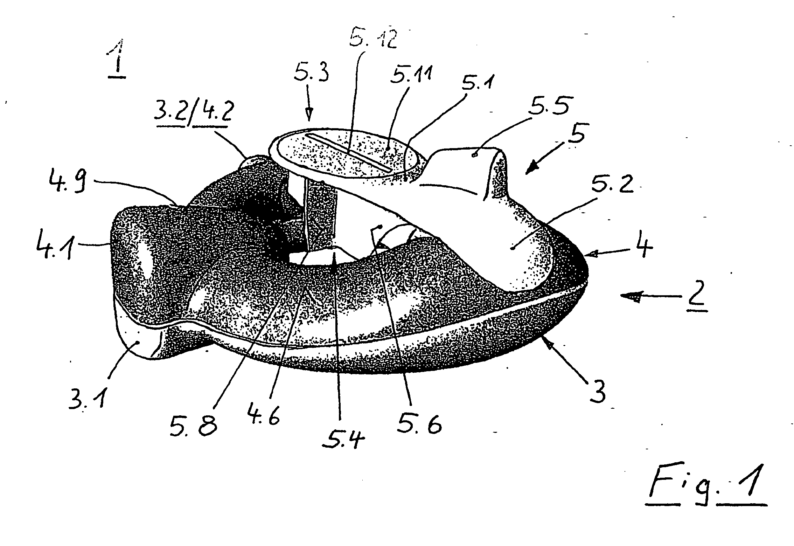

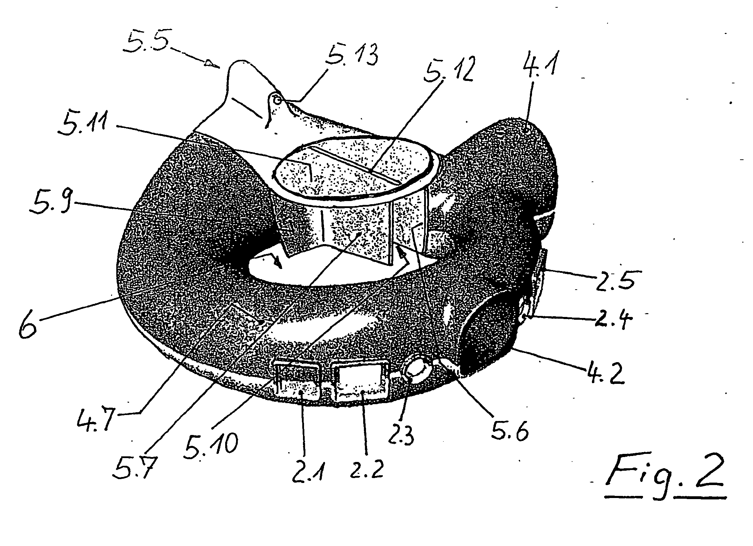

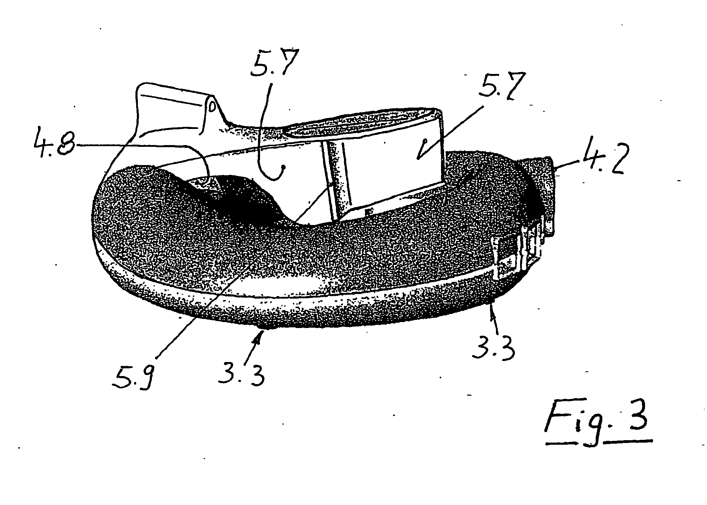

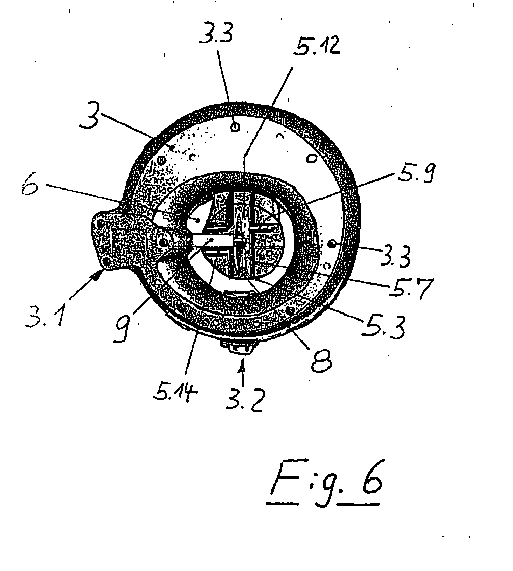

Die neue Trennvorrichtung ist in den Figuren 1, 2, 3 und 6 in verschiedenen perspektivischen Ansichten gezeigt. Der Blick fällt bei Figur 1 dabei seitlich vom Bediener aus auf die Trennvorrichtung 1. Die Trennvorrichtung 1 besteht aus einem Gehäuse 2, welches hier vorzugsweise aus einem Unterteil 3 und einem Oberteil 4 zusammengesetzt ist.

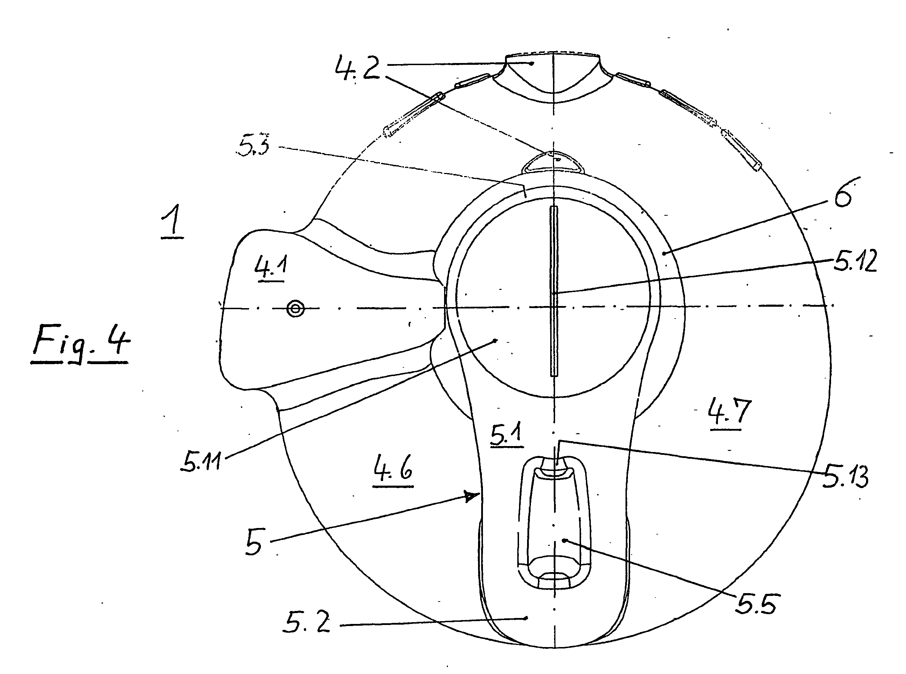

Das Gehäuse 2 ist, wie in Figur 4 in Draufsicht gezeigt, O-förmig ausgebildet. Der Modelltisch 5 ist mit seinem vorderen Bereich 5.2 drehbeweglich um eine horizontale, nicht dargestellte Achse in dem dem Bediener zugewandten Bereich des Gehäuses 2, vorzugsweise im Oberteil 4, gehaltert. Im vom Modelltisch 5 links liegenden Bereich des Gehäuses 2 ist das Gehäuse 2 ais Antriebsaufnahme 3.1; 4.1 ausgebildet.

An der vom Bediener abgewanden Front weist das Gehäuse 2 eine Anschlussöffnung 3.2; 4.2 zum Anschluss einer Staubabsaugleitung auf.

Von der Bedienerseite aus gesehen sind die links und rechts vom Modelltisch 5 liegenden Gehäusebereiche als linke 4.6 bzw. rechte 4.7 Handauflage ausgebildet, die vorzugsweise ergonomisch ausgeformt und bevorzugt mit einer Antirutschschicht versehen sind.

Damit sich der vordere Bereich 5.2 des Modelltisches 5 in das Oberteil 4 des Gehäuses 2 einschmiegen kann, ist an der betreffenden Stelle im Oberteil 4 eine zur Form des Modelltischbereiches korrespondierende Nut 4.8 eingearbeitet.

Das freie Ende, der hintere Bereich 5.3 des Modelltisches 5, ragt in den vom Gehäuse umschlossenen Raum 6 hinein. Der Grundkörper 5.1 des Modelltisches 5 ist in diesem besagten hinteren Bereich 5.3 als Modellauflage 5.11 ausgebildet, vorzugsweise ist diese Modellauflage 5.11 kreisförmig ausgeformt, wobei die Auflagenebene vorzugsweise parallel zur Drehachse liegt. Diese Modellauflage 5.11, auch Werkstückauflage genannt, liegt oberhalb der Trennscheibe 8 und ist mit einem Durchbruch 5.12 versehen, durch weichen die Trennscheibe 8 während des Arbeitens hindurchtreten kann.

Unterhalb der Modellauflage 5.11, im unteren Bereich 5.4, sind am Modelltisch 5 eine linke Wand 5.6 und eine rechte Wand 5.7 angeordnet, die gemeinsam einen Kanal 5.10 bilden, in dem die Trennscheibe 8 angeordnet wird.

Bevorzugt ist an der linken 5.6 und an der rechten 5.7 Wand jeweils noch ein seitwärts abragender Steg 5.8 bzw. 5.9 vorgesehen, welche in Verbindung mit der betreffenden Wand 5.6 bzw. 5.7 eine Fingeranlage bilden.

In der linken Wand 5.6 ist, vom Bediener wegzeigend, also in Richtung des freien Ende 5.3 des Modelltisches 5 gesehen, hinter dem Steg 5.8 eine im Wesentlichen vertikal gerichtete Ausnehmung 5.14 vorgesehen, in die die, die drehende Welle umgebende, feststehende Führungshülse 9 des Antriebes während des Absenkens des Modelltisches 5 eintaucht, damit die Trennscheibe 8 durch den Durchbruch 5.12 der Modellauflage 5.11 hindurchtreten kann.

Am Modelltisch 5 ist zudem eine Positionierhilfseinrichtung vorgesehen, die dem Bediener zugewandt und vorzugsweise im gelagerten Bereich des Modelltisches 5 angeordnet und bevorzugt als Höcker 5.5 ausgebildet ist. Hier in dieser Ausführung ist vorgesehen, dass diese Positionierhilfseinrichtung eine Peileinrichtung ist; bevorzugt ist diese Peileinrichtung eine einfache optische Einrichtung mit einem Peillicht 5.13.

Der eingangs der Beschreibung genannte, bevorzugt im Bereich der Handauflage angeordnete optische Sensor bzw. Kontaktschalter zur Ein- und Ausschaltung des Antriebes ist in den Figuren nicht gezeigt.

Im Gehäuse 2 sind in der vom Bediener abgewandten Front mehrere Durchlässe 2.1, 2.2, 2.3, 2.4 und 2.5 für die Aufnahme der Kabeleinführung, Schalter und Sicherungen vorgesehen. Am Unterteil 3 sind mehrere Füße 3.3 zur rutschfesten Aufstellung der Vorrichtung 1 auf einer Arbeitsfläche angeordnet.

In dem Oberteil 4 ist bevorzugt im Bereich 4.1 eine Signaldiode angeordnet, welche die Betriebsbereitschaft der Vorrichtung anzeigt.

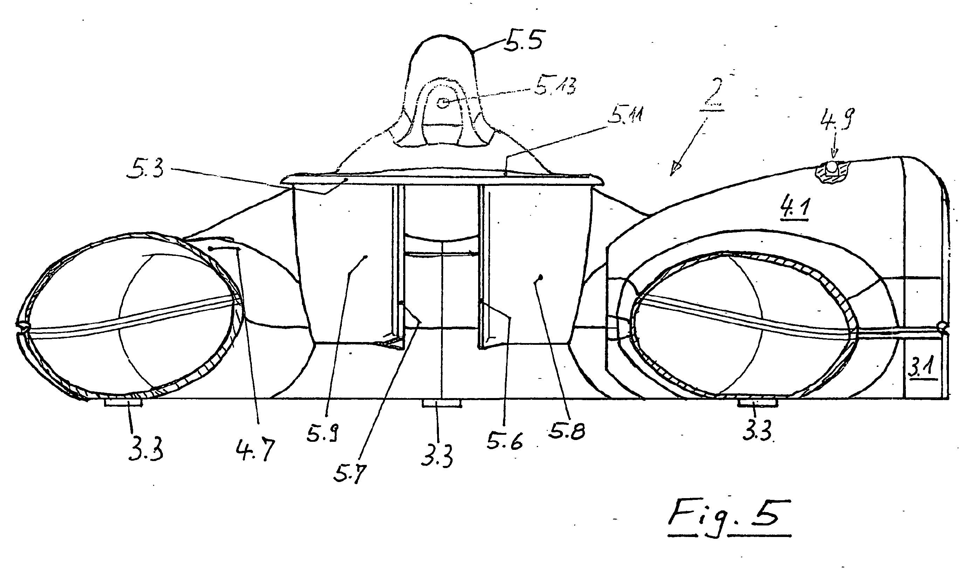

In der Figur 5 ist eine Frontalansicht auf die Trennvorrichtung mit Blick zum Bediener hin gezeigt. Das Gehäuse 2 der Trennvorrichtung 1 ist in einer vor dem Modelltisch 5 liegenden vertikalen Ebene geschnitten. In dieser Figur ist insbesondere die Lage des Modelltisches 5 in Bezug auf die Peileinrichtung 5.5/5.13 sowie bezüglich der Trennscheibe 8 gezeigt. Zudem ist die Anordnung der linken Wand 5.6 und der rechten Wand 5.7 sowie der quer zu letzteren stehenden Stege 5.8 und 5.9 unter der Modellauflage 5.11 ersichtlicht. Der von der linken Wand 5.6 und der rechten Wand 5.7 gebildete geschützte Kanal zur Aufnahme der Trennscheibe 9 ist mit 5.10 bezeichnet.

Alle neuen in der Beschreibung und/oder Zeichnung sowie dem Patentansprüchen offenbarten Einzel- und Kombinationsmerkmale werden als erfindungswesentlich angesehen, auch wenn diese nicht besonders hervorgehoben wurden.

### Bezugszeichenliste:

| | | | |
|---|---|---|---|
| 1 | Trennvorrichtung | | |
| 2 | Gehäuse | | |
| 2.1-2.5 | Durchlässe im Gehäuse | | |
| | | | |
| 3 | Unterteil | 3.1 | Antriebsaufnahme |
| 3.2 | Anschtussöffnung | 3.3 | Füße |
| | | | |
| 4 | Oberteil | 4.1 | Antriebsaufnahme |
| 4.2 | Anschlussöffnung | 4.6 | linke Handauflage |
| 4.7 | rechte Handauflage | 4.8 | Nut |
| 4.9 | Signalleuchte | | |
| 5 | Modelltisch | 5.1 | Grundkörper |
| 5.2 | vorderer Bereich | 5.3 | hinterer Bereich |
| 5.4 | unterer Bereich | 5.5 | Höcker |
| 5.6 | linke Wand | 5.7 | rechte Wand |
| 5.8 | Steg (an Pos. 5.6) | 5.9 | Steg (an Pos. 5.7) |
| 5.10 | Kanal | | |
| 5.11 | Modellauflage (Werkstückauflage | | |
| 5.12 | Durchbruch | 5.13 | Peillicht |
| 5.14 | Ausnehmung | | |
| 6 | umschlossener Raum | | |
| 8 | Trennscheibe | 9 | Führungshülse |

## Patentansprüche

1. Verfahren zum Auftrennen zahntechnischer Modelle in einzelne Modellstümpfe, wobei der zahntechnische Zahnkranz auf einer Modellbasis lösbar aufgesteckt ist und mit einer Trennscheibe das Trennen erfolgt, wobei das zahntechnische Modell zum Trennen auf einem Modelltisch fixiert ist und das zahntechnische Modell und die Trennscheibe relativ zueinander bewegt werden, wobei die Trennscheibe von unten her das zahntechnische Modell durchtrennt,
**dadurch gekennzeichnet,**
**dass** das auf dem Modelltisch fixierte zahntechnische Modell mitsamt der an einem Ende des Modelltisches vorgesehenen Modellauflage unter Beschreiten einer gedachten Kreisbogenlinie um das andere, um eine horizontale Achse drehbeweglich gehalterte Ende des Modelltisches zur Ausführung des Trennschnittes in Richtung Trennscheibe bewegbar ist.

2. Verfahren zum Auftrennen nach Anspruch 1,
**dadurch gekennzeichnet,**
**dass** die Modellauflage im Wesentlichen horizontal orientiert ist und während der Trennbewegung im Wesentlichen unter einem rechten Winkel zur Trennscheibe geführt wird.

3. Verfahren zum Auftrennen nach Anspruch 1 oder 2,
**dadurch gekennzeichnet,**
**dass** während der annähernd vertikalen Trennbewegung des Modelltisches eine weitere, im Wesentlichen horizontal geführte Trennbewegung durch kontrolliertes, zumindest zeitweise Verschieben des zahntechnischen Modells auf dem Modelltisch erzeugt und ersterer überlagert wird.

4. Verfahren zum Auftrennen nach Anspruch 1, 2 oder 3,
**dadurch gekennzeichnet,**
**dass** das zahntechnische Modell mit den Händen des Bedieners auf der Arbeitsfläche, der Modellauflage des Modelltisches, fixiert wird.

5. Verfahren zum Auftrennen nach Anspruch 1, 2, 3 oder 4,
**dadurch gekennzeichnet,**
**dass** zur Ausrichtung des Zahnkranzes beziehungsweise der Festlegung der Trennstelle am Zahnkranz ein gebündelter Lichtstrahl, ein Peillicht, vorzugsweise ein Laserlicht dient.

6. Vorrichtung (1) zum Auftrennen von zahntechnischen Modellen, wobei die Vorrichtung eine Antriebseinheit für eine Trennscheibe (9), zugeordnete Schalt- und Steuerungstechnik, und einen Modelltisch (5), mit einer Modellauflage (5.11) zur Aufnahme eines zahntechnischen Modells, umfasst und, wobei die Trennscheibe (9) und der Modelltisch (5) relativ zueinander bewegbar sind, wobei sich die Modellauflage (5.11) in der Ausgangsstellung oberhalb der Trennscheibe (9) befindet und einen zur Trennscheibe korrespondierend angeordneten Durchbruch (5.12) aufweist,
**dadurch gekennzeichnet,**
**dass** der Modelltisch (5) um eine horizontale Drehachse verschwenkbar am Gehäuse (2, 4) der Vorrichtung (1) einseitig gehaltert ist

7. Vorrichtung nach Anspruch 6,
**dadurch gekennzeichnet,**
**dass** am Modelltisch (5) unterhalb der Modellauflage (5.11) beidseits je eine sich in den unteren Bereichen (5.4) erstreckende Wand (5.6 und 5.7) vorgesehen sind.

8. Vorrichtung nach Anspruch 7,
**dadurch gekennzeichnet,**
**dass** von jeder Wand (5.6 und 5.7) seitlich abragend ein Steg (5.8 bzw. 5.9) angeordnet ist.

9. Vorrichtung nach einem der Ansprüche 6 bis 8,
**dadurch gekennzeichnet,**
**dass** im vorderen Bereich (5.2) des Modelltisches (5) eine nach oben aufragende Peileinrichtung, vorzugsweise in Form eines Höckers (5.5), vorgesehen ist.

10. Vorrichtung nach Anspruch 9,
**dadurch gekennzeichnet,**
**dass** die Peileinrichtung eine Lichtquelle (5.13) zur Aussendung eines Peillichtes enthält.

11. Vorrichtung nach einem der Ansprüche 6 bis 10,
**dadurch gekennzeichnet,**
**dass** mindestens im Bereich einer der Handauflagen (4.6, 4,7) ein optischer Sensor oder ein Kontaktschalter zur Erzeugung eines Schaltsignals für die Antriebseinheit vorgesehen ist.

12. Vorrichtung nach einem der Ansprüche 6 bis 10,
**dadurch gekennzeichnet,**
**dass** im vorderen Bereich (5.2) des Modelltisches (5) innerhalb des Gehäuses (2) ein Kontaktschalter vorgesehen ist, welcher schaltungstechnisch mit der Antriebseinheit in Verbindung steht.

## Claims

1. Method of separating dental models into individual model stumps, wherein the dental tooth crown is detachably plugged onto a model base and the separation takes place with a separating disc, wherein the dental model is, for separation, fixed on a model table and the dental model and the separating disc are moved relative to one another, wherein the separating disc separates the dental model from below, **characterised in that** the dental model fixed on the model table is movable, together with the model support provided at one end of the model table, following a notional arc about the other end, which is mounted to be rotationally movable about a horizontal axis, in the direction of the separating disc of the model table for execution of the separating cut.

2. Method of separating according to claim 1, **characterised in that** the model support is oriented to be substantially horizontal and during the separating movement is guided substantially at a right angle relative to the separating disc.

3. Method of separating according to claim 1 or 2, **characterised in that** during the approximately vertical separating movement of the model table a further, substantially horizontally guided separating movement is produced by controlled displacement, at least periodically, of the dental model on the model table and is superimposed on the former movement.

4. Method of separating according to claim 1, 2 or 3, **characterised in that** the dental model is fixed by the hands of the user on the work surface, i.e. the model support of the model table.

5. Method of separating according to claim 1, 2, 3 or 4, **characterised in that** a focused light beam, i.e. a direction-finding light, preferably a laser light, serves for alignment of the tooth crown or fixing of the separating point at the tooth crown.

6. Device (1) for separating dental models, wherein the device comprises a drive unit for a separating disc (9), associated switching and control systems, and a model table (5), with a model support (5.11) for reception of a dental model, and wherein the separating disc (9) and the model table (5) are movable relative to one another, wherein the model support (5.11) in the initial setting is disposed above the separating disc (9) and has a passage (5.12) arranged to correspond with the separating disc, **characterised in that** the model table (5) is mounted at one side at the housing (2, 4) of the device (1) to be pivotable about a horizontal axis of rotation.

7. Device according to claim 6, **characterised in that** a respective wall (5.6 and 5.7) extending in the lower regions (5.4) is provided on either side at the model table (5) below the model support (5.11).

8. Device according to claim 7, **characterised in that** a web (5.8 or 5.9) is arranged to be laterally projecting from each wall (5.6 and 5.6).

9. Device according to one of claims 6 to 8, **characterised in that** an upwardly projecting direction-finding device, preferably in the form of a hump (5.5), is provided in the forward region (12.2) of the model table (5).

10. Device according to claim 9, **characterised in that** the direction-finding device includes a light source (5.12) for emission of a direction-finding light.

11. Device according to one of claims 6 to 10, **characterised in that** an optical sensor or a contact switch for producing a switching signal for the drive unit is provided at least in the region of one of the hand supports (4.6, 4.7).

12. Device according to one of claims 6 to 10, **characterised in that** a contact switch connected in terms of switching with the drive unit is provided in the forward region (5.2) of the model table (5) within the housing (2).

## Revendications

1. Procédé permettant de séparer des modèles dentaires en différents moignons de modèles, la couronne dentaire dentée étant fixée de manière amovible sur une base de modèle et la séparation étant effectuée avec un disque pour la séparation ou la coupe, le modèle dentaire à séparer étant fixé sur une table à modèles et le modèle dentaire et le disque pour la séparation ou la coupe se déplaçant l'un par rapport à l'autre, le disque pour la séparation ou la coupe sectionnant le modèle dentaire par le dessous,
**caractérisé en ce**
**que** le modèle dentaire fixé sur la table à modèles puisse être déplacé avec le porte-modèle prévu à une extrémité de la table à modèles, lorsqu'il se déplace le long d'une ligne d'arc de cercle imaginaire, autour de l'autre extrémité de la table à modèles maintenue avec possibilité de mouvement de rotation autour d'un axe horizontal afin d'exécuter la coupe de séparation dans le sens du disque pour la séparation ou la coupe.

2. Procédé de séparation selon la revendication 1,
**caractérisé en ce**
**que** le porte-modèle est orientée essentiellement de manière horizontale et est guidé pendant le mouvement de séparation essentiellement sous un angle droit par rapport au disque pour la séparation ou la coupe.

3. Procédé de séparation selon la revendication 1 ou 2,
**caractérisé en ce**
**que** pendant le mouvement de séparation approximativement vertical de la table à modèles, un autre mouvement de séparation guidé ou conduit de manière essentiellement horizontale est produit par un déplacement contrôlé au moins par intermittence du modèle dentaire sur la table à modèles et est superposé au premier.

4. Procédé de séparation selon la revendication 1, 2 ou 3,
**caractérisé en ce**
**que** le modèle dentaire est fixé par les mains de l'opérateur sur la surface de travail, le porte-modèle de la table à modèles.

5. Procédé de séparation selon la revendication 1, 2, 3 ou 4,
**caractérisé en ce**
**qu'**un faisceau lumineux focalisé, un dispositif de localisation, de préférence un faisceau laser, sert à orienter la couronne dentée et/ou régler la détermination du point de séparation sur la couronne dentée.

6. Dispositif (1) permettant de séparer des modèles dentaires, le dispositif comprenant une unité d'entraînement pour un disque pour la séparation ou la coupe (9), des dispositifs d'entraînement et de commande affectés, et une table à modèles (5), avec un porte-modèle (5.11) pour recevoir un modèle dentaire et, le disque pour la séparation ou la coupe (9) et la table à modèles (5) pouvant être déplacés les uns par rapport à l'autre, le porte-modèle (5.11) se trouvant dans la position de départ au-dessus du disque pour la séparation ou la coupe (9) et comprenant une ouverture (5.12) disposée de manière correspondante au disque pour la séparation ou la coupe,
**caractérisé en ce**
**que** la table à modèles (5) est maintenue sur un côté du logement (2, 4) du dispositif (1) de façon à pouvoir être pivotée autour d'un axe de rotation horizontal.

7. Dispositif selon la revendication 6,
**caractérisé en ce**
**que** des parois (5.6 et 5.7) s'étendant dans les secteurs inférieurs (5.4) sont prévues sur la table à modèles (5) au-dessous du porte-modèle (5.11) de part et d'autre.

8. Dispositif selon la revendication 7,
**caractérisé en ce**
**qu'**une barre (5.8 et/ou 5.9) est disposée en faisant saillie latéralement à partir de ou depuis chaque paroi (5.6 et 5.7).

9. Dispositif selon une quelconque des revendications 6 à 8,
**caractérisé en ce**
**qu'**un dispositif de localisation faisant saillie vers le haut, de préférence sous la forme d'une bosse (5:5), est prévu dans le secteur avant (5.2) de la table à modèles (5).

10. Dispositif selon la revendication 9,
**caractérisé en ce**
**que** le dispositif de localisation possède une source lumineuse (5.13) pour émettre une lumière de localisation.

11. Dispositif selon une quelconque des revendications 6 à 10,
**caractérisé en ce**
**qu'**un capteur optique ou un interrupteur de contact servant à générer un signal de commutation pour l'unité d'entraînement est prévu au moins dans le secteur d'un des repose-mains (4.6, 4.7).

12. Dispositif selon une quelconque des revendications 6 à 10,
**caractérisé en ce**
**qu'**un interrupteur de contact est prévu dans le secteur avant (5.2) de la table à modèles (5), à l'intérieur du logement (2), qui est relié par le montage à l'unité d'entraînement.
